# FASCICULE DE BREVET EUROPEEN

(11) **EP 0 791 139 B1**
(45) Date de publication et mention de la délivrance du brevet: **22.03.2000**
(21) Numéro de dépôt: 95941774.2
(22) Date de dépôt: 06.12.1995
(51) Int. Cl.: F15B 1/04, F16F 9/00, F16F 5/00, F15B 21/06

(54) **STRUCTURE HETEROGENE D'ACCUMULATION OU DE DISSIPATION D'ENERGIE, PROCEDES D'UTILISATION D'UNE TELLE STRUCTURE ET APPAREILS ASSOCIES**
KONSTRUKTION FÜR HETEROGENE ENERGIEAKKUMULATION ODER ABLEITUNG, METHODE ZU DERENVERWENDUNG UND DAZUGEHÖRIGE VORRICHTUNG
HETEROGENEOUS ENERGY ACCUMULATION OR DISSIPATION STRUCTURE, METHODS FOR USING SUCH STRUCTURE AND ASSOCIATED APPARATUS

(30) Priorité: 09.12.1994 FR 9414856
(43) Date de publication de la demande: 27.08.1997
(73) Titulaire: D L D INTERNATIONAL, 75008 Paris (FR); Eroshenko, Valentin, 75008 Paris (FR)
(72) Inventeur: EROSHENKO, Valentin, F-75008 Paris (FR)
(74) Mandataire: Jaunez, Xavier
(86) Numéro de dépôt international: FR9501609
(87) Numéro de publication internationale: WO9618040

(56) Documents cités:
- EP-A- 0 057 130
- FR-A- 1 553 302
- DATABASE WPI Section PQ, Week 8814 Derwent Publications Ltd., London, GB; Class Q57, AN 88-097314 & SU,A,1 333 870 (KIEV POLY) , 30 Août 1987
- DATABASE WPI Section PQ, Week 8321 Derwent Publications Ltd., London, GB; Class Q57, AN 83-H0355K & SU,A,943 444 (EROSHENKO) , 15 Juillet 1982

## Description

L'invention concerne le domaine de la thermodynamique, et plus particulièrement les techniques d'accumulation ou de dissipation d'énergie associées aux appareils ou systèmes thermodynamiques.

Le but de l'invention est de développer une nouvelle technique d'accumulation ou de dissipation d'énergie qui soit capable de procurer des performances très supérieures à celles obtenues avec les techniques traditionnelles utilisant les fluides de travail classiques, c'est-à-dire les gaz et la vapeur pour l'accumulation d'énergie et les fluides visqueux habituels, tels que ceux utilisés dans les amortisseurs ou les absorbeurs de chocs, pour la dissipation d'énergie.

Dans les documents SU-A-1 333 870 et SU A-943 444, l'inventeur a exposé le principe général d'une structure hétérogène d'accumulation d'énergie du type à matrice solide capillaire poreuse qui est lyophobe au regard du liquide entourant cette matrice, c'est-à-dire que le liquide est non-mouillant pour cette matrice. La porosité capillaire est toutefois définie de façon théorique et rudimentaire dans ces documents, avec des passages capillaires de section constante. En réalité, il est apparu que la réalisation d'une telle matrice était très onéreuse, et que les performances de cette structure hétérogène étaient limitées en termes d'accumulation d'énergie. En outre, une matrice de ce type s'est révélée impropre à l'obtention de résultats significatifs pour dissiper de l'énergie.

L'invention a ainsi pour objet de concevoir une structure hétérogène plus performante, capable de mettre en oeuvre un processus thermodynamiquement réversible, et en particulier d'éviter les échauffements et/ou les turbulences lors d'une compression.

L'invention a également pour objet de réaliser des procédés d'utilisation d'une telle structure hétérogène, ainsi que des appareils de mise en oeuvre associés.

Il s'agit plus particulièrement d'une structure hétérogène d'accumulation ou de dissipation d'énergie destinée à être utilisée dans des appareils ou des systèmes thermodynamiques, du type à matrice solide capillaire poreuse et à liquide entourant cette matrice, ladite matrice étant lyophobe au regard dudit liquide, caractérisée en ce que la matrice solide capillaire poreuse est à porosité capillaire ouverte et de topologie complexe contrôlée, avec des passages capillaires à variations de section, c'est-à-dire dont le rayon de la section varie à l'intérieur d'un même passage, et/ou interconnectés entre eux pour former des labyrinthes, et le liquide entourant la matrice capillaire poreuse est choisi pour définir une surface de séparation solide/liquide qui est évolutive de façon isotherme et réversible en fonction de la pression extérieure à laquelle la structure est soumise.

Les critères principaux utilisés avec une telle structure hétérogène sont en fait la surface de séparation solide/liquide et la tension superficielle du liquide à l'interface avec le solide.

Une telle approche, esquissée seulement dans les documents SU-A-1 333 870 et SU-A-943 444 précités, se démarque ainsi radicalement de l'enseignement donné par la thermodynamique classique dans la mesure où on utilise l'énergie potentielle de l'interaction moléculaire, et la dépendance de cette énergie par rapport à la température. Ainsi, au lieu d'utiliser l'énergie cinétique du mouvement aléatoire des molécules de gaz ou de vapeur, on raisonne au niveau de l'énergie potentielle de l'interaction moléculaire en faisant pénétrer un liquide adapté dans des micro-passages (les dimensions vont typiquement du millième au dixième de micron), en laissant le liquide ressortir de ces micro-passages, avec une surface de séparation qui augmente à la pénétration du liquide et diminue au retrait du liquide, et ce dans un processus à la fois isotherme et réversible. On peut alors rencontrer une compression isobare-isotherme du milieu de travail sans transition de phase, en utilisant comme paramètres indépendants les valeurs de la température et de la surface de séparation solide/liquide. L'énergie accumulée ou dissipée est ainsi essentiellement thermo-moléculaire.

Selon un mode d'exécution particulier, les passages capillaires sont interconnectés entre eux, et ils sont agencés sous la forme de canaux cylindriques, de capillaires légèrement incurvés, ou de fentes, de façon à présenter une hystérésis faible lorsque la structure est soumise à un processus de compression-détente isotherme.

En variante, les passages capillaires sont à variations de section, et ils sont agencés sous la forme de canaux croisés, de canaux à alternance de resserrements ou à alternance de microsphères, de façon à présenter une hystérésis élevée lorsque la structure est soumise à un processus de compression-détente isotherme. Cette dernière variante est tout particulièrement intéressante lorsqu'on cherche à dissiper de l'énergie développée sous l'action d'un impact de surpression.

L'agencement particulier des canaux capillaires avec des variations de section et/ou une interconnexion labyrinthique définit ce que l'on peut considérer comme une topologie "complexe" contrôlée par opposition à la topologie simple retenue dans les premières hypothèses exposées dans les documents précités.

On pourra aussi prévoir que les passages capillaires sont revêtus sur leur surface d'un agent choisi pour les rendre lyophobes au regard du liquide adopté, par exemple un composé organosiliconé ou organofluoré. Ceci permet en particulier d'utiliser pour la matrice poreuse des matériaux qui seraient normalement mouillés par le liquide concerné : grâce à ce revêtement en effet, on peut satisfaire à la condition essentielle selon laquelle la matrice doit être lyophobe au regard du liquide.

On pourra également prévoir que la matrice comporte des particules discrètes renfermant une substance ferromagnétique et/ou que le matériau de la capsule enveloppant ladite matrice renferme des substances ferromagnétiques. Ceci permet d'exercer une influence sur la structure hétérogène par un champ magnétique, par exemple pour déplacer cette structure hétérogène à l'intérieur d'une enceinte étanche fermée.

La matrice capillaire poreuse n'est par ailleurs pas nécessairement réalisée sous une forme monolithique. On pourra en particulier prévoir que cette matrice est réalisée sous la forme de particules discrètes formant avec le liquide une suspension ou une solution colloïdale.

De préférence, le matériau constitutif de la matrice capillaire poreuse est choisi dans le groupe constitué par les gels de silice, les composés de silice et de chrome, les aluminosilicates, l'alumine, les verres poreux, et le graphite, et le liquide associé est choisi dans le groupe constitué par les sels, les fondants, les métaux liquides et leurs alliages, les eutectiques à basse température, le mercure, les alliages de Wood à bas point de fusion, les solutions aqueuses, et les solutions polaires (par exemple des électrolytes).

On pourra aussi prévoir que la structure hétérogène est encapsulée dans une enveloppe flexible ou analogue la protégeant de tout contact avec un liquide extérieur différent utilisé dans l'appareil ou le système thermodynamique concerné.

L'invention concerne également des procédés d'utilisation d'une structure hétérogène présentant l'une au moins des caractéristiques précitées.

Il s'agit tout d'abord d'un procédé pour accumuler de l'énergie, caractérisé en ce qu'on dispose dans une chambre fermée au moins une structure hétérogène, dont la matrice lyophobe est non-monoporeuse en étant formée d'un mélange de matrices différentes, et on soumet cette structure à une compression forcée à une température constante prédéterminée pour forcer le liquide de cette structure dans les passages capillaires de sa matrice solide poreuse et augmenter ainsi la surface de séparation solide/liquide, l'énergie accumulée lors de cette compression forcée pouvant être ensuite récupérée par une détente spontanée isotherme pour effectuer un travail utile.

Selon un cas particulier, l'énergie apportée lors de la compression forcée est essentiellement mécanique, et la température constante est choisie inférieure à la moitié de la température critique du liquide de la structure hétérogène, mais supérieure à la température de fusion dudit liquide, l'énergie récupérée ensuite lors de la détente spontanée isotherme étant principalement mécanique. Selon un autre cas particulier, l'énergie apportée lors de la compression forcée est essentiellement thermique, et la température constante est choisie entre 0,5 et 1,0 fois la température critique du liquide de la structure hétérogène, l'énergie récupérée ensuite lors de la détente spontanée isotherme étant principalement thermique.

Il est également possible de prévoir que l'énergie accumulée est stockée à l'issue de la phase de compression forcée, par refroidissement de la structure hétérogène à une température inférieure à la température de fusion du liquide de ladite structure, avant d'être libérée au moment désiré par simple échauffement de ladite structure à une température supérieure à la température de fusion précitée.

Selon l'invention, il est prévu un appareil servant à la mise en oeuvre de ce procédé, ledit appareil comportant une chambre fermée de volume variable dans laquelle est logée au moins une structure hétérogène, ladite chambre étant délimitée par un piston coulissant, ou par une membrane flexible ou analogue.

Il s'agit aussi d'un procédé pour dissiper de l'énergie, caractérisé en ce qu'on dispose dans une chambre fermée au moins une structure hétérogène, dont la matrice lyophobe est ou non monoporeuse, et on soumet cette structure à une compression élevée par un impact, pour forcer du liquide de cette structure dans les passages capillaires de sa matrice solide poreuse et augmenter ainsi la surface de séparation solide/liquide, après quoi on laisse la structure se détendre spontanément à une pression basse prédéterminée.

Selon l'invention, il est aussi prévu un appareil servant à la mise en oeuvre du procédé précité, ledit appareil comportant une chambre fermée de volume variable dans laquelle est logée au moins une structure hétérogène, ladite chambre étant délimitée par un piston coulissant dont la tige est dirigée dans la direction de l'impact prévu.

D'autres caractéristiques et avantages de l'invention apparaîtront plus clairement à la lumière de la description qui va suivre et des dessins annexés, concernant des modes de réalisation particuliers, en référence aux figures où :
- la figure 1 illustre une structure hétérogène conforme à l'invention soumise à une compression isotherme, dont la surface de séparation solide/liquide évolue en augmentant entre la situation initiale a) et la situation finale b) ;
- la figure 2 illustre divers modes d'exécution d'une matrice capillaire poreuse à topologie complexe contrôlée conforme à l'invention, les variantes a), b), c), d) correspondant à des blocs solides présentant dans leur masse des passages capillaires, et la variante e) correspondant à des particules discrètes (dont les passages capillaires ne sont pas visibles) formant avec le liquide une suspension ou une solution colloïdale ;
- la figure 3 est une coupe schématique d'un passage capillaire isolé, avant pénétration forcée du liquide en a), et après pénétration forcée du liquide en b);
- la figure 4a est un diagramme illustrant une compression isotherme mise en oeuvre avec une structure hétérogène à matrice monoporeuse ;
- la figure 4b est un diagramme illustrant trois courbes caractéristiques correspondant à des structures hétérogènes à matrice capillaire en verre poreux et liquide associé constitué par du mercure, la matrice étant non-monoporeuse ;
- la figure 5 est un diagramme mettant en évidence l'importance de la température choisie lors de la compression isotherme par rapport à un seuil correspondant à la moitié de la température critique du liquide de la structure hétérogène, pour accumuler essentiellement soit de l'énergie mécanique soit de l'énergie thermique ;
- les figures 6 à 9 illustrent divers accumulateurs d'énergie, avec aux figures 7 à 9 un encapsulage d'une structure hétérogène conforme à l'invention dans une enveloppe flexible ou déformable ;
- la figure 10 illustre schématiquement un mode d'accumulation d'énergie mécanique à température constante, l'énergie accumulée en a) étant ensuite (éventuellement après un temps de stockage) libérée en b) ;
- la figure 11 illustre un appareil d'accumulation d'énergie mécanique mettant en oeuvre le principe illustré à la figure 10, dans une certaine plage de températures (comprises entre la température de fusion du liquide de la structure hétérogène et la moitié de la température critique de ce liquide) ;
- la figure 12 illustre un autre appareil pour accumuler de l'énergie thermique avec une structure hétérogène conforme à l'invention, et dans une autre plage de températures que pour l'appareil de la figure 11 (températures comprises entre 0,5 et 1,0 fois la température critique du liquide de la structure hétérogène) ;
- la figure 13 est un diagramme mettant en évidence la plus ou moins grande hystérésis obtenue, selon la topologie complexe adoptée pour la porosité capillaire de la matrice de la structure hétérogène, ce qui est tout particulièrement important dans le cadre d'une dissipation d'énergie, et la figure 14 est un diagramme mettant en évidence la disparition d'énergie sans transformation en chaleur ("trou noir énergétique") ;
- la figure 15 illustre un appareil de dissipation d'énergie, tel qu'un amortisseur de chocs, dans lequel est logée une structure hétérogène conforme à l'invention;
- les figures 16 et 17 sont deux diagrammes de compression-détente obtenus avec une structure hétérogène particulière dont la matrice capillaire est un bloc de verre poreux à micropores et dont le liquide est un alliage de Wood à bas point de fusion ;
- les figures 18 à 20 sont des diagrammes illustrant les caractéristiques enregistrées avec un amortisseur anti-shimmy d'avion dont la chambre de travail est remplie par une structure hétérogène particulière dont la matrice capillaire est un silicagel poreux et le liquide est de l'eau.

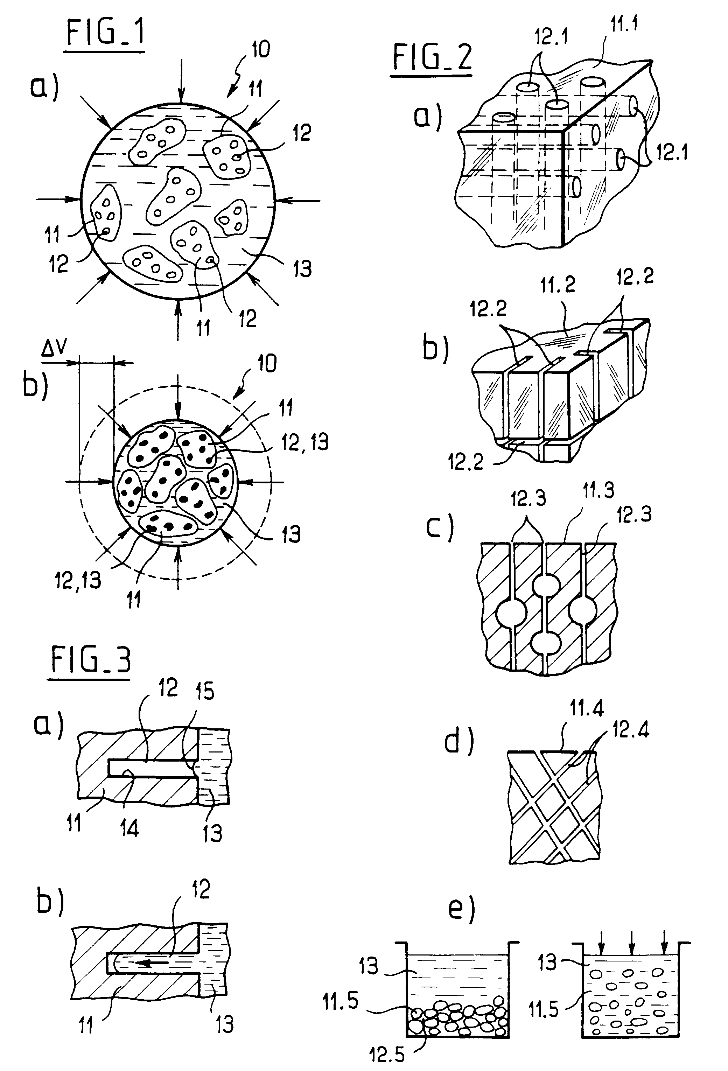

La figure 1 illustre schématiquement une structure hétérogène 10 d'accumulation ou de dissipation d'énergie conforme à l'invention, destinée à être utilisée dans des appareils ou des systèmes thermodynamiques.

La structure hétérogène 10 est essentiellement constituée par une matrice solide capillaire poreuse 11 et par un liquide 13 entourant cette matrice capillaire poreuse, laquelle matrice est lyophobe au regard dudit liquide, c'est-à-dire que la tension superficielle est telle que ce liquide soit non-mouillant lorsqu'il est au contact de la surface de la matrice. La matrice capillaire poreuse 11 est à porosité capillaire ouverte et de topologie complexe contrôlée, laquelle topologie complexe définit les trajectoires de déplacement pour le liquide. Cette porosité est notée 12 sur la représentation schématique de la figure 1, et elle est définie par des passages capillaires à variations de section et/ou interconnectés entre eux pour former des labyrinthes. Le liquide 13 entourant la matrice capillaire poreuse 11 est choisi pour définir une surface de séparation solide/liquide qui est évolutive de façon isotherme et réversible en fonction de la pression extérieure à laquelle la structure est soumise. Le liquide 13 entourant la matrice capillaire poreuse 11 lyophobe au regard de ce liquide ne peut donc spontanément pénétrer à l'intérieur des pores ou capillaires, et cette pénétration ne peut qu'être forcée, par suite d'une compression adéquate exercée sur la structure hétérogène.

Sur la représentation de la figure 1, la matrice capillaire poreuse 11 est réalisée sous la forme de particules discrètes à porosité ouverte, qui sont en suspension dans le liquide environnant 13 associé à cette matrice, mais on verra par la suite qu'il est également possible de réaliser la matrice solide capillaire poreuse sous la forme d'un bloc présentant aussi dans sa masse des passages capillaires organisés conformément à la topologie complexe précitée, ainsi que cela sera décrit ultérieurement en référence à la figure 2.

Sur la figure 1, pour passer de la situation illustrée en a) à la situation illustrée en b), on exerce sur la structure hétérogène 10 une compression suffisante (symbolisée par des flèches radiales) pour forcer la pénétration du liquide dans le réseau capillaire de la matrice solide de cette structure hétérogène, et cette compression est isotherme. Cette pénétration forcée a été illustrée schématiquement sur la figure 3, où l'on distingue une situation a) dans laquelle le liquide 13 se trouve devant l'entrée d'un passage capillaire 12 ménagé dans la matrice solide capillaire poreuse 11, sans toutefois pénétrer dans ce canal, la frontière du liquide étant alors formée par un ménisque 15. Dans la situation b), par suite d'une compression isotherme de la structure hétérogène, on a forcé la pénétration du liquide à l'intérieur du passage capillaire 12. Le seuil de pression qu'il est nécessaire de franchir correspond à la pression capillaire de Laplace, dont la valeur est donnée par la formule P = (2σ. cosθ)/r, dans laquelle σ et la tension superficielle du liquide de la structure hétérogène à la température considérée, θ est l'angle de contact (cet angle étant nécessairement supérieur à 90° en vertu de la caractéristique de lyophobie précitée), et r est le rayon du canal capillaire. Le passage de la situation a) à la situation b) de la figure 3 a pour effet d'augmenter la surface de séparation solide/liquide que l'on peut noter Ω, la variation Δ Ω correspondant à la surface latérale des passages capillaires concernés. Ainsi, la surface de séparation solide/liquide est évolutive de façon isotherme et réversible en fonction de la pression extérieure à laquelle la structure hétérogène est soumise, ce qui permet de développer un travail utile. Lorsque la pression appliquée sur la structure hétérogène est relâchée, on obtient alors une détente spontanée qui permet le retour de la situation b) à la situation a). Il est intéressant de noter que l'écoulement du liquide à l'intérieur de la porosité capillaire de la matrice solide lyophobe est infra-laminaire, c'est-à-dire que le nombre de Reynolds est sensiblement nul, de sorte que la transition d'une situation à l'autre s'effectue sans frottement, et donc sans échauffement. Ce résultat constitue un élément d'une importance capitale dans les applications envisageables de la structure hétérogène selon l'invention.

Sur la figure 2, on a illustré divers modes d'exécution de la matrice capillaire poreuse à topologie complexe contrôlée de la structure hétérogène.

En a), la matrice 11.1 est réalisée sous la forme d'un bloc présentant dans sa masse des passages capillaires 12.1 débouchant par des pores, ces passages étant réalisés sous la forme de canaux parallèles s'étendant dans deux directions perpendiculaires. Ces canaux 12.1 sont ici de section constante, et ils sont interconnectés entre eux pour réaliser un réseau formant un labyrinthe.

En b), le mode d'exécution représenté concerne une matrice 11.2 également formée d'un bloc, mais dont les passages capillaires 12.2 sont réalisés sous la forme de fentes également de section constante et interconnectées entre elles.

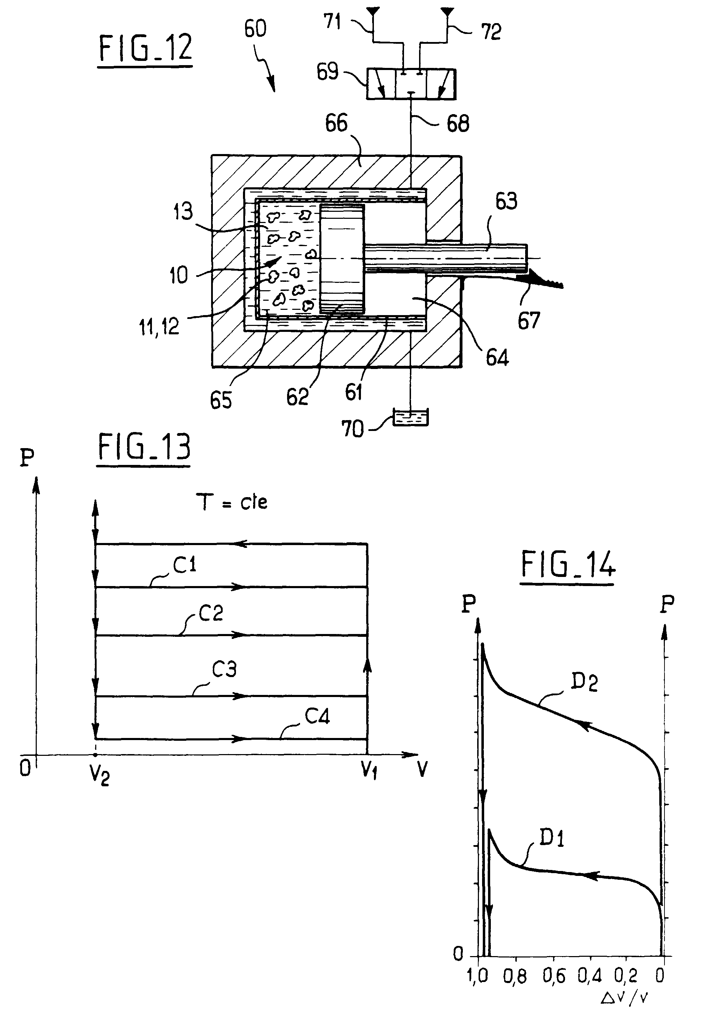

Les modes d'exécution illustré en a) et b), ou en variante avec des passages capillaires légèrement incurvés, ont pour effet que la structure présente une hystérésis faible lorsqu'elle est soumise à un processus de compression-détente isotherme. On reviendra sur cette question d'hystérésis au niveau de la description de la figure 13, car cette hystérésis est particulièrement importante dans le cadre d'une recherche de dissipation d'énergie.

En c), on a illustré une matrice capillaire poreuse 11.3 constituée d'un bloc présentant des canaux 12.3 à variations de section. En l'espèce, ces canaux sont constitués par une alternance de petits capillaires et de microsphères agencés en série. Les variations de section seront choisies faibles (c'est-à-dire avec un rapport très inférieur à 2 entre la section maximale et la section minimale) si la structure hétérogène est avant tout destinée à accumuler de l'énergie, et importantes (rapport au moins égal à 2 entre la section maximale et la section minimale, et si possible largement supérieur à cette valeur) si la structure hétérogène est avant tout destinée à dissiper de l'énergie.

En d), on a illustré une matrice 11.4 présentant des passages capillaires 12.4 agencés sous la forme de canaux croisés, de façon à former des labyrinthes. Ces canaux ont été illustrés avec une section constante, mais il va de soi que l'on pourra combiner les modes d'exécution c) et d), avec des canaux qui sont à la fois à variations de section et interconnectés entre eux pour former des labyrinthes.

Les modes d'exécution illustrés en c) et d) présentent, par rapport aux modes d'exécution illustrés en a) et b), une hystérésis élevée lorsque la structure est soumise à un processus de compression-détente isotherme.

En e), on a illustré une matrice solide 11.5 réalisée sous la forme de particules discrètes à porosité capillaire, formant avec le liquide 13 une suspension ou une solution colloïdale. Ces particules peuvent présenter individuellement un agencement de canaux capillaires avec une topologie complexe contrôlée, ce qui n'est pas visible sur la représentation donnée ici. Sur la partie gauche, les particules discrètes sont agglutinées entre elles, ce qui correspond à une surface de séparation solide/liquide minimale dans la mesure où le liquide environnant 13 ne parvient pas spontanément dans la porosité capillaire de la matrice. En exerçant une compression extérieure suffisante, le liquide 13 est forcé dans la porosité capillaire de la matrice, ce qui a pour effet d'augmenter la surface de séparation solide/liquide, cette surface de séparation étant évolutive de façon isotherme et réversible.

Dans certains cas, le matériau de départ avec lequel est réalisée la matrice poreuse est tel qu'il est mouillé par le liquide choisi. Dans ce cas, il convient de trouver une modification de la matrice pour retrouver la condition essentielle selon laquelle ladite matrice doit être lyophobe au regard du liquide concerné. Dans ce cas, les passages capillaires de la matrice qui est réalisée dans un matériau normalement mouillé par le liquide concerné sont revêtus sur leur surface d'un agent choisi pour rendre leur surface non-mouillable par le liquide 13. Sur la figure 3, on a noté 14 la surface d'un passage capillaire 12 qui pourrait être revêtu chimiquement d'un agent choisi pour rendre cette surface non mouillable par le liquide. On pourra utiliser à cet effet des composés organosiliconés ou organofluorés.

Selon un autre mode d'exécution particulier, il pourra être prévu que le bloc constituant la matrice 11 comporte des particules discrètes renfermant une substance ferromagnétique. Ceci permet d'exercer une influence déterminée sur le bloc constitutif de la matrice poreuse, ce qui s'avère en particulier intéressant lorsque l'on souhaite déplacer, pour la changer de position, la structure hétérogène disposée à l'intérieur d'une enceinte étanche scellée que l'on ne veut pas ouvrir.

Le matériau constitutif de la matrice capillaire poreuse 11 pourra par exemple être un gel de silice, un composé de silice et de chrome, un aluminosilicate, de l'alumine, un verre en sodium-borosilicate poreux, du graphite. Le liquide associé pourra alors être un sel, un fondant, un électrolyte, un métal liquide ou un alliage de métaux liquides, un eutectique à basse température (par exemple gallium-indium, ou gallium-indium-plomb, ou encore gallium-plomb-étain), du mercure, une solution aqueuse, une solution polaire (antigel, électrolyte), ou encore un alliage de Wood ou autre à bas point de fusion. Il est rappelé que l'alliage de Wood est un alliage eutectique dont le point de fusion est de 95°C, un tel alliage étant souvent utilisé pour des soudures dites à la vague de composants électroniques. A titre indicatif, on peut citer les "couples" solide-liquide suivants qui conviennent particulièrement bien : gels de silice-mercure, aluminosilicates-alliage de Wood, silochrome-gallium, paraffine-eau.

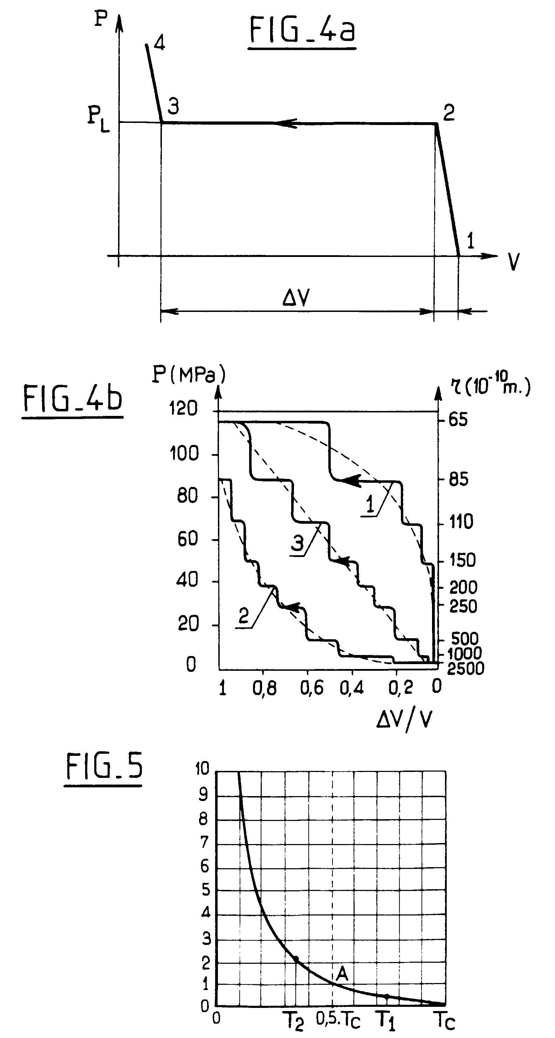

La figure 4a est un diagramme donnant la pression en fonction du volume et illustrant un processus de compression isotherme d'une structure hétérogène à matrice monoporeuse. Entre les points 1 et 2 de la courbe, la structure hétérogène se comporte comme un système quasi-condensé, dans la mesure où son volume varie extrêmement peu, puis, lorsqu'une pression de seuil est atteinte (cette pression de seuil est notée P_{L} car il s'agit de la pression capillaire de Laplace) le tronçon reliant les points 2 et 3, et correspondant à une variation importante de volume ΔV, se situe sur une droite horizontale, donc à pression constante. Cette phase correspond au remplissage forcé du liquide à l'intérieur de la porosité capillaire de la matrice. Au point 3, le remplissage de la porosité capillaire est terminé, de sorte que l'on retrouve entre le point 3 et le point 4, un système quasi-condensé. Il est intéressant de noter qu'on obtient un processus de compression isobare - isotherme sans transition de phase. Ceci est obtenu grâce à la matrice capillaire poreuse et au liquide associé, ladite matrice étant lyophobe au regard de ce liquide, liquide dont la composition n'est pas modifiée lors du processus de compression isotherme, la tension superficielle dudit liquide étant une fonction de la seule température. Le travail de la compression isobare-isotherme de la structure hétérogène est donné par le produit de la pression P et de la variation de volume ΔV. Il est intéressant de noter que l'on obtient une proportionnalité à la pression, contrairement aux systèmes thermodynamiques classiques utilisant des gaz ou de la vapeur, avec lesquels le travail de la pression isotherme est proportionnel au logarithme de la pression. Ceci explique pourquoi on obtient une capacité d'accumulation d'énergie au moins six à huit fois supérieure, par rapport à la capacité obtenue avec du gaz ou de la vapeur à une pression maximale comparable. Il est intéressant de noter également que l'augmentation forcée de la surface de séparation liquide-solide et la diminution spontanée de cette surface de séparation s'effectuent sans qu'il y ait rupture de la continuité du liquide, donc sans turbulence ni cavitation: par suite, on obtient l'avantage d'un niveau de bruit quasiment inexistant dans le cadre d'une utilisation d'une structure hétérogène du type précité.

Ainsi que cela a été indiqué plus haut, la figure 4a illustre bien le phénomène isobare-isotherme du processus de compression de la structure hétérogène à matrice monoporeuse (une seule dimension de pores, c'est-à-dire r = constante ou ∂r / ∂V = O). Le phénomène isotherme provient en fait des conditions de l'expérience (T = constante), alors que le phénomène isobare découle de la formulation de la pression capillaire de Laplace : en effet, lorsque le système fonctionne avec T = constante, on a nécessairement σ = constante, et l'on obtient toujours P = constante du fait de la monoporosité de la matrice utilisée (r est en effet constant, donc ∂r / ∂V = O).

Il est cependant possible d'obtenir les caractéristiques les plus diverses des structures hétérogènes du point de vue du diagramme donnant P en fonction de V.

La figure 4b illustre ainsi différentes caractéristiques de structures hétérogènes réalisées avec des matrices en verre poreux et un liquide associé qui est du mercure. On n'est plus ici en présence de matrices monoporeuses, c'est-à-dire que r est variable, donc que ∂r / ∂V ≠ O. Avec une matrice non-monoporeuse formée d'un mélange de matrices différentes, on peut utiliser efficacement la structure hétérogène pour accumuler de l'énergie, conformément à l'un des aspects de l'invention. Les courbes 1, 2, 3 du diagramme de la figure 4b représentent différents cas obtenus en mélangeant différents types de matrices (à poudre, en grains), par exemple de cinq à dix matrices différentes et en faisant varier le volume partiel Vᵢ de chacune des matrices et leurs rayons rᵢ = constante :
- la courbe 1, quasi-convexe, correspond à une proportion prépondérante de volumes partiels Vᵢ de matrices qui ont un rᵢ minimum (donc P maximum) par rapport aux volumes Vⱼ de matrices qui ont un rⱼ maximum (donc P minimum) et on constate que cette structure hétérogène est principalement comprimée aux pressions élevées ;
- la courbe 2, quasi-concave, correspond inversement à une proportion prépondérante de volumes partiels Vᵢ de matrices qui ont un rᵢ maximum (donc P minimum) par rapport aux volumes Vⱼ de matrices qui ont un rⱼ minimum (donc P maximum), et on constate que cette structure hétérogène est principalement comprimée aux basses pressions ;
- la courbe 3, quasi-linéaire, correspond à une proportion équilibrée, avec une distribution volumétrique équilibrée de volumes partiels de matrices ayant différentes tailles de pores et capillaires.

Ainsi que cela sera décrit plus loin, il est possible de prévoir que la structure hétérogène soit encapsulée dans une enveloppe flexible ou analogue la protégeant de tout contact avec un liquide extérieur différent utilisé dans l'appareil ou le système thermodynamique concerné.

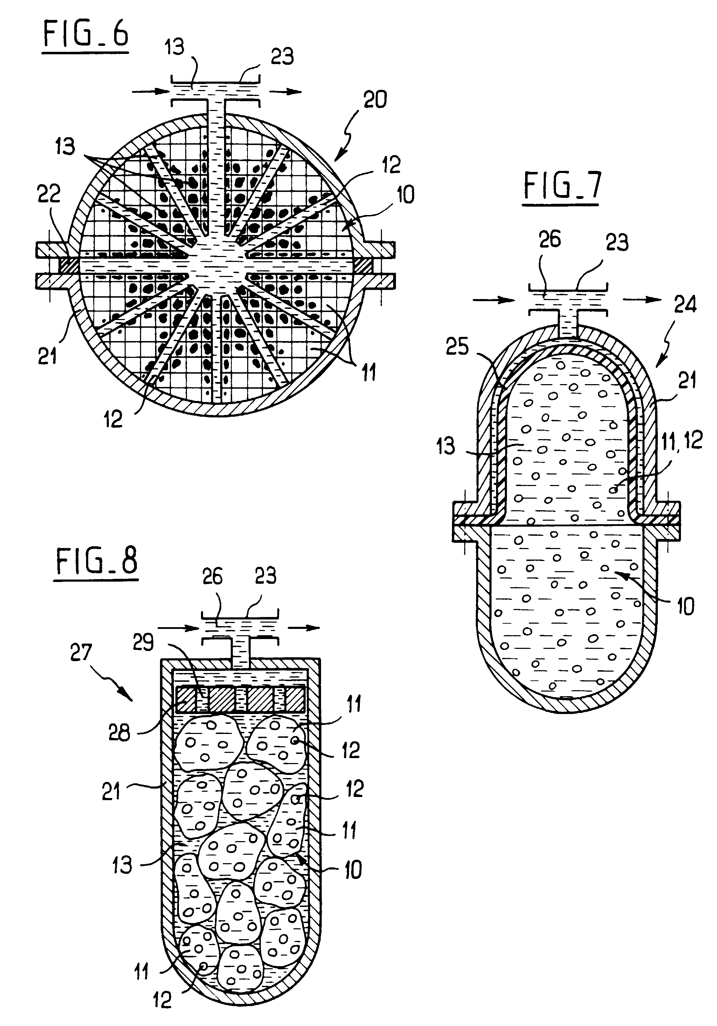

Sur la figure 6, on distingue un accumulateur d'énergie 20 renfermant une structure hétérogène 10 du type précédemment décrit, dans un cas où le fluide hydraulique concerné passant dans une tubulure 23 convient comme liquide non-mouillant pour la structure hétérogène concernée. Dans ce cas, il n'est aucunement besoin de prévoir un encapsulage de la structure hétérogène. On distingue ainsi un boîtier 21 en deux parties assemblées entre elles de façon étanche, avec un joint associé 22, la structure hétérogène logée à l'intérieur du boîtier 21 comportant une matrice poreuse capillaire lyophobe 11 représentée ici sous la forme d'une pluralité de sections individuelles, qui sont non mouillées par le liquide 13 associé passant dans la tubulure 23. Il pourra par exemple s'agir d'un système hydraulique dans lequel un excès ou une insuffisance d'énergie du fluide moteur se produit périodiquement.

Dans d'autres cas, il peut s'avérer nécessaire d'éviter tout contact entre la structure hétérogène et le fluide hydraulique de travail. C'est alors qu'on prévoit un encapsulage ou un enrobage de la structure hétérogène, ainsi que cela est illustré sur les variantes des figures 7 à 9.

Sur la figure 7, on distingue ainsi un accumulateur d'énergie 24, constitué par une enveloppe extérieure rigide 21 en deux portions pinçant une membrane de séparation 25 formant diaphragme flexible. La structure hétérogène 10 est logée dans la chambre que délimite le diaphragme flexible, en étant ainsi isolée de tout contact avec le fluide hydraulique 26 passant dans la tubulure 23. En l'espèce, on a représenté une structure hétérogène du type constitué de particules discrètes 11 à porosité capillaire ouverte 12 de topologie complexe contrôlée formant avec le liquide 13 une suspension.

La figure 8 illustre un autre accumulateur d'énergie 27 comportant comme précédemment une enveloppe rigide 21 dont la chambre recevant la structure hétérogène doit être isolée du fluide hydraulique 26 concerné passant dans la tubulure 23. En remplacement du diaphragme flexible précédent, on a ici prévu une grille 28 présentant un maillage dont les orifices 29 sont suffisamment petits pour ne pas laisser passer les capsules incluant la structure hétérogène 10. Sur la figure 8, on a illustré à plus grande échelle des capsules (en forme de "bonbons") renfermant une structure hétérogène à matrice poreuse 11 présentant des canaux capillaires ouverts 12 à topologie complexe contrôlée, avec tout autour du liquide associé 13 au regard duquel la matrice est lyophobe. La structure hétérogène est dans ce cas emprisonnée dans une capsule dont le diamètre est supérieur à celui des orifices 29. On pourra utiliser des capsules en plastique, en polymère ou en métal, afin d'isoler du fluide 26 la structure hétérogène confinée dans l'enveloppe rigide 21. On pourra en outre éventuellement incorporer des particules magnétiques dans le tissu de l'enveloppe formant chaque "bonbon".

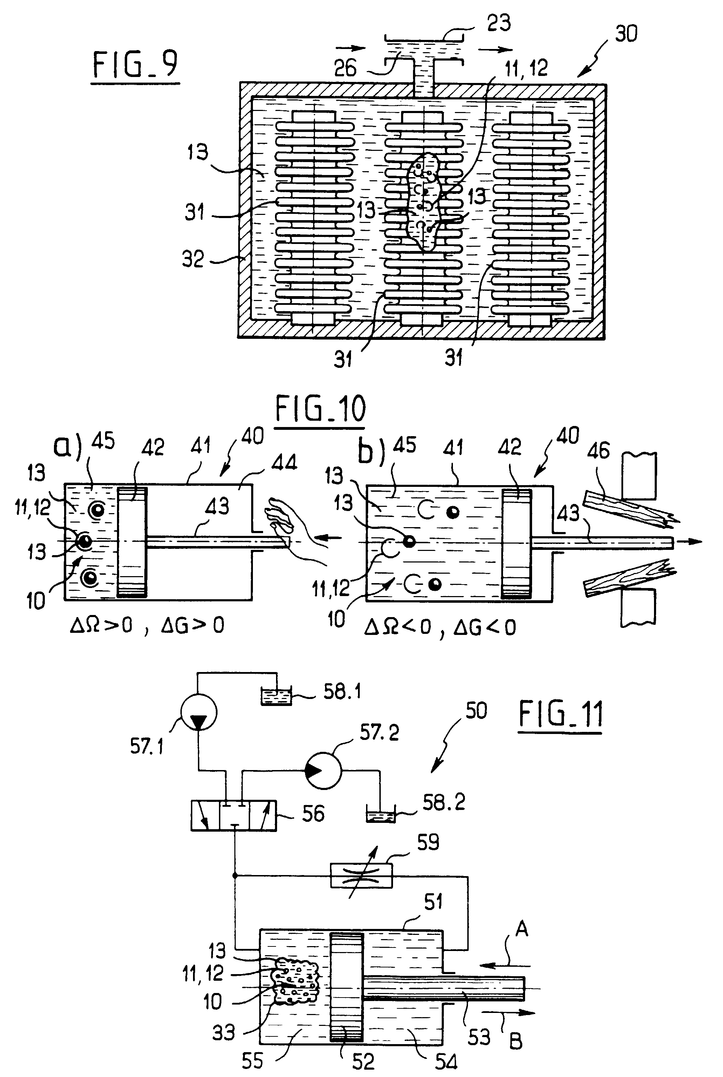

On peut encore prévoir un encapsulage étanche en confinant la structure hétérogène de l'invention dans des soufflets métalliques, ainsi que cela est illustré sur la figure 9. On distingue en effet trois soufflets 31, dont l'espace intérieur est occupé par une structure hétérogène 10 conforme à l'invention, ces trois soufflets 31 étant logés dans un boîtier étanche 32 dans lequel passe du fluide hydraulique 26 de travail provenant de la tubulure 23.

Lorsqu'on utilise une technique d'encapsulation de la structure hétérogène, il est préférable de procéder à un traitement sous vide, de façon à évacuer l'air, car cet air constitue un matériau inintéressant sur le plan énergétique.

La figure 10 illustre un mode d'accumulation d'énergie mécanique à température constante, avec une structure hétérogène du type conforme à l'invention, qui est logée dans une chambre fermée d'un système à piston et cylindre. On distingue ainsi un appareil 40 comportant un cylindre 41 dans lequel coulisse un piston 42 dont la tige est référencée 43. La chambre annulaire est notée 44 et la chambre de pleine section 45. Dans cette dernière chambre, est disposée une structure hétérogène 10 à matrice capillaire poreuse de topologie complexe contrôlée et lyophobe au regard du liquide associé. La représentation schématique donnée ici symbolise des pores lyophobes dans lesquels sont contenus du liquide lors de la compression en a), alors que ce liquide est ressorti des pores lors de la détente spontanée en b). Lors de la compression de la structure hétérogène, le liquide est forcé dans les passages capillaires de la matrice solide de cette structure, avec une température constante, ce qui a pour effet d'augmenter la surface de séparation solide-liquide (ΔΩ>0) et d'augmenter le potentiel de Gibbs du système (ΔG>0). Ainsi en a), on trouve une extension forcée de la surface de séparation (ΔΩ>0), tandis que, lors du relâchement de la pression, la surface de séparation diminue (ΔΩ<0) ainsi que le potentiel de Gibbs (ΔG<0). L'énergie accumulée lors de la compression forcée peut ainsi être récupérée par une détente spontanée isotherme pour effectuer un travail utile. On a représenté schématiquement ici le travail utile par la destruction d'un barreau 46 contre lequel vient en appui l'extrémité de la tige de piston 43. En l'espèce, l'énergie apportée lors de la compression forcée est essentiellement mécanique. On prévoira en outre que la température constante à laquelle est effectuée la compression est choisie inférieure à la moitié de la température critique du liquide de la structure hétérogène, tout en étant supérieure à la température de fusion de ce liquide. Dans ce cas, l'énergie récupérée ensuite lors de la détente spontanée isotherme est essentiellement mécanique.

La figure 11 illustre un appareil 50 mettant en application le principe d'accumulation d'énergie mécanique précédemment exposé en référence à la figure 10.

On retrouve un système à cylindre et piston, comportant un cylindre 51 dans lequel coulisse un piston 52 dont la tige est notée 53. La chambre annulaire est notée 54, et la chambre de pleine section 55. Dans cette dernière, est logée une structure hétérogène 10 conforme à l'invention, laquelle structure est ici enrobée dans une enveloppe 33, qui est suffisamment flexible pour transmettre les forces de pression, tout en évitant le contact avec le fluide hydraulique présent dans la chambre 55. La flèche A correspond au sens de la charge, et la flèche B au sens de la décharge. Il est prévu une valve 59 mettant en communication par un étranglement variable les chambres 54 et 55 du cylindre. Un distributeur 56 assure le raccordement de ce système soit à une source hydraulique constituée par une pompe 57.1 et son réservoir associé 58.1, soit à un moyen de consommation d'énergie constitué par un moteur hydraulique 57.2 dont le réservoir associé est noté 58.2. Il suffit d'agir sur le distributeur 56 en choisissant la position de gauche pour réaliser la charge, ou la position de droite pour réaliser la décharge, et la position neutre pour la coupure. Un tel appareil 50 peut fonctionner selon divers modes :
- charge d'accumulateur et décharge par la tige de piston : à la charge, le distributeur 56 est en position neutre et la structure hétérogène est comprimée, et le piston peut être bloqué en position de rentrée maximale en fermant la valve 59 ; en ouvrant à nouveau la valve 59, on libère l'énergie accumulée et la tige de piston peut effectuer un travail utile, étant entendu qu'on peut à tout moment arrêter la course du piston en refermant la valve 59;
- charge hydraulique et décharge d'accumulateur: avant la charge, le distributeur 56 est mis dans sa position extrême droite, de façon que la pompe 57.1 comprime la structure hétérogène, puis le distributeur est remis en position neutre ; la libération de l'énergie accumulée est réalisée en mettant le distributeur dans sa position extrême gauche, le travail utile étant réalisé par le moteur hydraulique 57.2 ;
- charge mécano-hydraulique et décharge d'accumulateur : le mode précédent est modifié en ouvrant la valve 59 après que le distributeur 56 a été remis en position neutre, pour récupérer un travail utile par la tige de piston.

En l'espèce, la structure hétérogène est donc reçue dans une chambre fermée de volume variable qui est délimitée par un piston coulissant. Il va de soi que l'on pourrait utiliser en variante un appareil du type de celui de la figure 7 ou 8 utilisant une membrane flexible 25 ou une grille 28.

En variante du processus précédent, il peut être prévu que l'énergie apportée lors de la compression forcée de la structure hétérogène est essentiellement thermique. Dans ce cas, il est apparu que la température constante devrait être choisie entre 0,5 et 1,0 fois la température critique T_{c} du liquide de la structure hétérogène (conformément aux explications données plus loin en référence à la figure 5). L'énergie récupérée ensuite lors de la détente spontanée isotherme est alors principalement thermique.

Sur la figure 12, on a illustré un accumulateur d'énergie thermique mettant en oeuvre le procédé de l'invention. On distingue ainsi un appareil 60 comportant un cylindre 61 dans lequel coulisse un piston 62 dont la tige est notée 63. On a noté 64 et 65 la chambre annulaire et la chambre de pleine section du cylindre, la structure hétérogène 10 étant logée dans cette dernière chambre. En l'espèce, un fluide caloporteur circule tout autour du cylindre 61, le tout étant logé dans une enceinte isolante thermiquement 66. La conduite d'entrée 68 comporte un distributeur 69 qui permet de relier cette conduite soit à une source de fluide froid 71, soit à une source de fluide chaud 72. On a également schématisé un cliquet 67 permettant de verrouiller le piston à l'issue de la phase de compression isotherme, ce qui permet de stocker l'énergie accumulée. Lorsque l'on veut récupérer cette énergie, il suffit de débloquer le cliquet 67, ce qui autorise l'expulsion spontanée du liquide hors de la structure poreuse capillaire de la matrice. La sortie d'utilisation de cet accumulateur thermique est notée 70.

En cas de compression isotherme, la chaleur latente de la formation de surface vient de l'extérieur par l'agent chauffant de la source 72. On trouve ainsi à l'entrée une petite quantité d'énergie mécanique appliquée à la tige 63, et une grande quantité d'énergie thermique à partir de l'agent chauffant. Lors de la compression, le distributeur 69 est dans sa position extrême gauche ou droite, de sorte que l'on obtient de l'accumulation d'énergie thermique dans la mesure où la température choisie pour l'agent chauffant dépasse la valeur de 0,5 fois la température critique T_{c} du liquide de la structure hétérogène. Plus cette température choisie est élevée, plus la modification de la surface de séparation est importante, et donc plus la capacité d'accumulation d'énergie de la structure hétérogène est élevée. En déplaçant le distributeur 69 vers sa position extrême droite, on transfère l'énergie thermique précédemment accumulée, et on relâche le cliquet 67 pour permettre au piston de se déplacer spontanément vers la droite sous l'action de la pression exercée par le liquide de la structure hétérogène sortant des pores et capillaires. La surface de séparation se contracte spontanément, ce qui augmente l'énergie interne de l'agent à chauffer de la source 71, à cause du dégagement de la chaleur latente de formation de surface lors de la contraction de cette surface de séparation.

Le diagramme de la figure 5 illustre les variations du rapport entre les composantes mécanique et thermique de l'énergie interne en fonction de la température, ou plus précisément du rapport entre la température constante choisie et la température critique T_{c} du liquide de la structure hétérogène. Ce diagramme met en évidence un point A correspondant à l'identité entre les composantes mécanique et thermique, ceci pour une valeur de température égale à la moitié de la température critique précitée (0,5xT_{c}). Aux températures T1 supérieures à cette limite, on aura essentiellement un processus d'accumulation d'énergie thermique, alors que pour une température T2 inférieure à cette limite, on aura essentiellement un processus d'accumulation d'énergie mécanique.

Il sera possible si nécessaire, de prévoir que l'énergie accumulée est stockée à l'issue de la phase de compression forcée, pendant une durée déterminée, par refroidissement de la structure hétérogène à une température inférieure à la température de fusion du liquide de ladite structure, avant d'être libérée au moment désiré par simple échauffement de ladite structure à une température supérieure à la température de fusion précitée.

Le diagramme de la figure 13 illustre divers cycles de compression-détente isotherme, avec quatre cycles donnant des droites de retour pour la détente notées C1, C2, C3, C4, correspondant à des valeurs de pression constante différentes. Pour la droite C1, l'écart par rapport à la compression isotherme est faible (par exemple voisin de 5%), ce qui est obtenu par une topologie de matrice capillaire poreuse donnant une hystérésis faible dans le processus de compression-détente isotherme de la structure hétérogène. Par contre, la droite C4 correspond à une hystérésis maximale, ce qui est particulièrement intéressant lorsqu'il s'agit de dissiper de l'énergie.

La figure 14 illustre deux cycles différents D1, D2 de compression isotherme, avec en abscisses le taux de remplissage de la porosité capillaire à topologie complexe contrôlée de la matrice de la structure hétérogène par le liquide associé au regard duquel la matrice est lyophobe. On constate par ce diagramme que la compression forcée permet d'absorber complètement l'énergie fournie, le système restant dans un état comprimé sans se détendre. Ceci n'est obtenu que dans le cas où l'on dispose d'une hystérésis élevée. Dans ce cas, on trouve une véritable stabilité de la structure hétérogène à l'état comprimé.

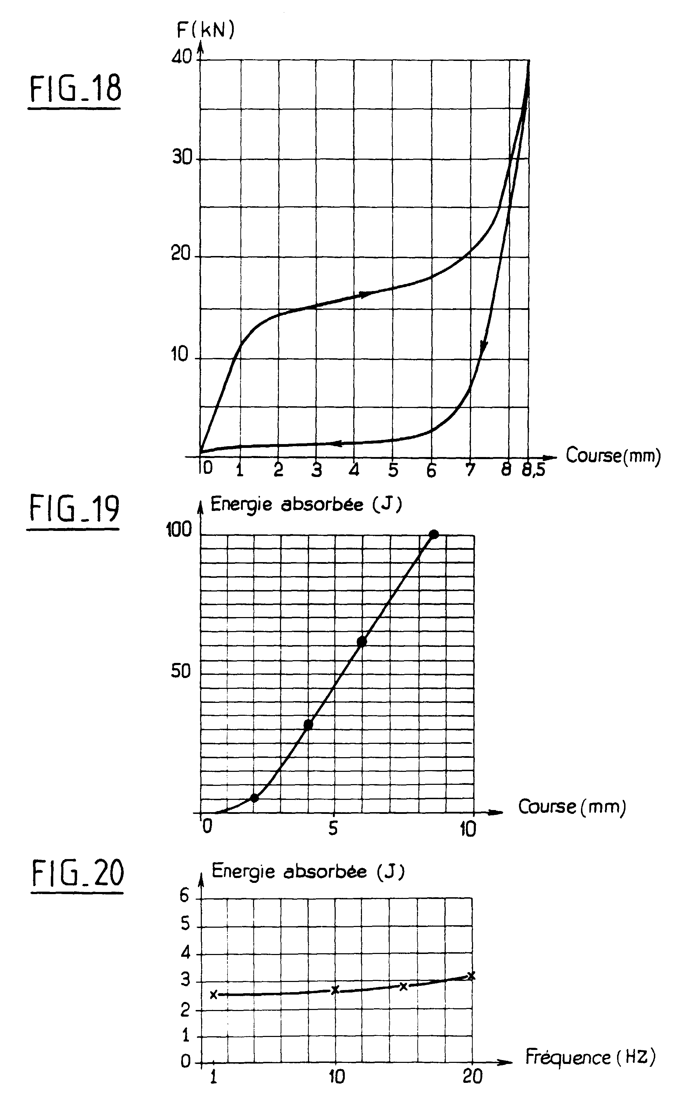

On a illustré à titre d'exemple aux figures 18 à 20 les caractéristiques obtenues dans le cadre d'essais menés sur un amortisseur de vibrations (anti-shimmy) pour un avion gros porteur, lequel amortisseur incorporait une structure hétérogène conforme à l'invention.

Plus précisément, l'amortisseur concerné se composait d'un cylindre et de deux pistons avec leur tige en opposition, l'espace délimité entre les deux pistons, dont les déplacements sont guidés par les parois du cylindre, formant une chambre de travail : on a alors rempli cette chambre de travail d'une structure hétérogène particulière, avec une matrice de silicagel poreux modifié pour être lyophobe par des substances organosiliconées, et un liquide associé au regard duquel la matrice est donc lyophobe, constitué en l'espèce par de l'eau contenant un antigel.

On a soumis un tel amortisseur équipé d'une structure hétérogène à une sollicitation sinusoïdale (jusqu'à une fréquence voisine de 20 Hz) appliquée au niveau des appuis d'extrémité des tiges associées aux pistons. Le diamètre des pistons était de 30 mm, et la course maximale de chaque piston (avec sa tige) de 8,5 mm.

Le diagramme force/course obtenu, illustré à la figure 18, montre que l'absorption d'énergie des vibrations de shimmy de la structure hétérogène est très performante. On obtient une caractéristique quasi-statique pour l'amortisseur. En faisant varier la vitesse du déplacement de 1,8 à 48 mm/minute, on a pu constater que toutes les caractéristiques relevées aux différentes vitesses coïncidaient.

Le diagramme de la figure 19 représentant l'énergie absorbée en fonction de la course lors d'un cycle en quasi-statique, montre justement qu'à partir d'un déplacement d'environ 2mm, l'énergie absorbée varie linéairement en fonction de la course de la tige du piston.

Le diagramme de la figure 20, représentant l'énergie absorbée en fonction de la fréquence de sollicitation, montre une quasi indépendance de l'énergie absorbée. On voit que la bande de passage en fréquence est assez large pour les énergies et forces considérées.

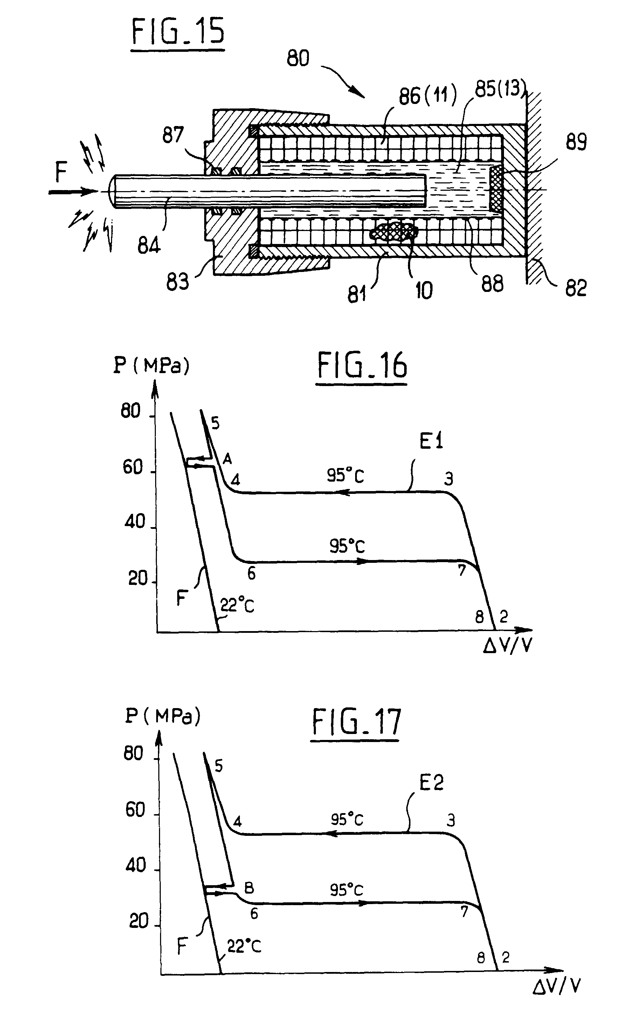

La figure 15 illustre un appareil 80 de dissipation d'énergie utilisant une structure hétérogène du type précité. Le domaine typique d'application est constitué par les amortisseurs de chocs. L'appareil 80 comprend ainsi une enveloppe 81 rigidement solidaire de l'objet 82 à protéger, et fermée par un embout 83 dans lequel coulisse une tige-piston 84 de façon étanche grâce à des joints 87. Une butée interne est prévue, notée 89. On dispose à l'intérieur de l'enveloppe 81 une structure hétérogène 10 qui peut être réalisée sous la forme d'une enveloppe flexible perméable au liquide environnant et renfermant des particules en poudre constituant la matrice poreuse capillaire lyophobe, ou en variante une structure capillaire 86 (formant la matrice lyophobe 11 de la structure hétérogène), agencée circonférentiellement à l'intérieur de l'enveloppe 81, ainsi qu'une chambre de liquide 85 (formant le liquide 13 associé de la structure hétérogène). Dans le cas d'une enveloppe, on pourra prévoir des inserts 88 de support pénétrables hydrauliquement.

Dans ce cas, on dispose dans une chambre fermée 85 au moins une structure hétérogène à matrice capillaire poreuse lyophobe de topologie complexe contrôlée, et on soumet cette structure à une compression élevée par un impact, lequel impact est symbolisé par la flèche F exercée sur l'extrémité de la tige-piston 84. Ceci force du liquide de la structure hétérogène dans les passages capillaires de sa matrice poreuse, et augmente ainsi la surface de séparation solide-liquide, après quoi on peut laisser la structure se détendre spontanément à une pression basse prédéterminée. On notera que la tige-piston 84 est dirigée dans la direction de l'impact prévu.

On va enfin décrire deux exemples particuliers mettant en oeuvre l'invention, à l'aide d'un diagramme de compression-détente isotherme (donnant la pression P en MPa en fonction de ΔV/V) obtenu avec une structure hétérogène particulière dont la matrice capillaire est un bloc de verre poreux à micropores, avec une topologie complexe contrôlée et dont le liquide associé est un alliage de Wood à bas point de fusion (95°C). A titre indicatif, la dimension des micropores pourra être de l'ordre de 2 x 10⁻⁸ m.

Sur la figure 16, on distingue la courbe F qui est la courbe de compression à température ambiante (22°C) de l'ensemble matrice solide/liquide solidifié.

On commence par échauffer cet ensemble à une température de 95°C, qui est la température de fusion de l'alliage de Wood. On comprime la structure hétérogène en parcourant ainsi les points 2, 3, 4, 5 sur le diagramme E1 représenté. On abaisse ensuite un peu la pression jusqu'à une valeur légèrement supérieure à la pression de Laplace, pour arriver au point A, puis on refroidit l'ensemble à température ambiante, de sorte que le liquide se solidifie et peut être stocké longtemps. Si l'on réchauffe l'ensemble à la température de fusion du liquide solidifié, le cycle de détente peut alors reprendre à partir du point A, en joignant les points 6, 7, 8. Le point 8 est confondu avec le point 2 de départ, dans la mesure où le processus est réversible, ainsi que cela a été dit plus haut.

La figure 17 illustre une variante du diagramme de la figure précédente, avec un diagramme E2 dans lequel, à la fin du cycle de compression, on a abaissé la pression jusqu'à une pression basse inférieure à la pression de Laplace. Le dispositif est refroidi et solidifié, et peut rester à l'état solide pendant une durée extrêmement longue. Si l'on remonte la température de l'échantillon à la température de fusion de l'alliage de Wood, le système se libère et exécute un travail mécanique avec une grande force et une grande course (points B, 6, 7, 8).

Un tel stockage d'énergie trouvera de nombreuses applications, et on peut citer à titre d'exemple le déploiement des panneaux solaires de satellites, ou la réalisation de systèmes de sécurité automatiques totalement autonomes sur le plan énergétique.

On constate en particulier, à la lumière des diagrammes des figures 16 et 17, que la structure hétérogène de l'invention possède des propriétés comparables à celles des matériaux dits à mémoire de forme. Cependant, alors que la mémoire de forme traditionnelle est un passage de l'état martensitique à l'état austénitique, on est ici en présence d'une évolution de la surface de contact (ou de séparation) sous une force extérieure, avec ensuite un processus spontané de libération de l'énergie (réduction de la surface de contact) et une récupération du travail mécanique utile. En outre, la structure hétérogène de l'invention possède des avantages sensibles par rapport aux matériaux traditionnels à mémoire de forme (Ti - Ni, alliages cuivreux par exemple), dans la mesure où les valeurs des forces et des courses de dilatation sont beaucoup plus élevées avec la structure hétérogène selon l'invention. A titre de comparaison, la dilatation des matériaux traditionnels à mémoire de forme varie de 2 à 8 % tandis qu'on obtient des valeurs de 40 à 80 % avec une structure hétérogène selon l'invention. La force développée par la structure hétérogène peut en outre prendre des valeurs énormes (quelques milliers à plusieurs millions de newtons), alors que les alliages Ti - Ni ne permettent guère de dépasser 10 à 100 newtons.

L'invention n'est pas limitée aux modes de réalisation qui viennent d'être décrits, mais englobe au contraire toute variante reprenant les caractéristiques essentielles énoncées plus haut.

## Revendications

1. Structure hétérogène d'accumulation ou de dissipation d'énergie (10) destinée à être utilisée dans des appareils ou des systèmes thermodynamiques, du type à matrice solide capillaire poreuse et à liquide entourant cette matrice, ladite matrice étant lyophobe au regard dudit liquide, caractérisée en ce que la matrice solide capillaire poreuse (11) est à porosité capillaire ouverte et de topologie complexe contrôlée, avec des passages capillaires (12) à variations de section, c'est-à-dire dont le rayon de la section varie à l'intérieur d'un même passage, et le liquide (13) entourant la matrice capillaire poreuse (11) est choisi pour définir une surface de séparation solide/liquide qui est évolutive de façon isotherme et réversible en fonction de la pression extérieure à laquelle la structure est soumise.

2. Structure selon la revendication 1, caractérisée en ce que les passages capillaires (12.3, 12.4) à variations de section sont agencés sous la forme de canaux croisés, de canaux à alternance de resserrements ou à alternance de microsphères, de façon à présenter une hystérésis élevée lorsque la structure est soumise à un processus de compression-détente isotherme.

3. Structure hétérogène d'accumulation ou de dissipation d'énergie (10) destinée à être utilisée dans des appareils ou des systèmes thermodynamiques, du type à matrice solide capillaire poreuse et à liquide entourant cette matrice, ladite matrice étant lyophobe au regard dudit liquide, caractérisée en ce que la matrice solide capillaire poreuse (11) est à porosité capillaire ouverte et de topologie complexe contrôlée, avec des passages capillaires (12) interconnectés entre eux pour former des labyrinthes, et le liquide (13) entourant la matrice capillaire poreuse (11) est choisi pour définir une surface de séparation solide/liquide qui est évolutive de façon isotherme et réversible en fonction de la pression extérieure à laquelle la structure est soumise.

4. Structure selon la revendication 3, caractérisée en ce que les passages capillaires (12.1, 12.2) interconnectés entre eux sont agencés sous la forme de canaux cylindriques, de capillaires légèrement incurvés, ou de fentes, de façon à présenter une hystérésis faible lorsque la structure est soumise à un processus de compression-détente isotherme.

5. Structure hétérogène d'accumulation ou de dissipation d'énergie (10) destinée à être utilisée dans des appareils ou des systèmes thermodynamiques, du type à matrice solide capillaire poreuse et à liquide entourant cette matrice, ladite matrice étant lyophobe au regard dudit liquide, caractérisée en ce que la matrice solide capillaire poreuse (11) est à porosité capillaire ouverte et de topologie complexe contrôlée, avec des passages capillaires (12) à variations de section, c'est-à-dire dont le rayon de la section varie à l'intérieur d'un même passage, et de plus interconnectés entre eux pour former des labyrinthes, et le liquide (13) entourant la matrice capillaire poreuse (11) est choisi pour définir une surface de séparation solide/liquide qui est évolutive de façon isotherme et réversible en fonction de la pression extérieure à laquelle la structure est soumise.

6. Structure selon la revendication 5, caractérisée en ce que la matrice (11.5) dont les passages capillaires (12.5) sont à variations de section et sont interconnectés entre eux, est réalisée sous la forme de particules discrètes formant avec le liquide une suspension ou une solution colloïdale.

7. Structure selon l'une des revendications 1, 3 et 5, caractérisée en ce que les passages capillaire (12) sont revêtus sur leur surface (14) d'un agent choisi pour les rendre lyophobes au regard du liquide adopté, par exemple un composé organosiliconé ou organofluoré.

8. Structure selon l'une des revendications 1, 3 et 5, caractérisée en ce que la matrice (11) comporte des particules discrètes renfermant une substance ferromagnétique et/ou le matériau de la capsule enveloppant ladite matrice renferme des substances ferromagnétiques.

9. Structure selon l'une des revendications 1 à 8, caractérisée en ce que le matériau constitutif de la matrice capillaire poreuse (11) est choisi dans le groupe constitué par les gels de silice, les composés de silice et de chrome, les aluminosilicates, l'alumine, les verres poreux, et le graphite, et le liquide associé (13) est choisi dans le groupe constitué par les sels, les fondants, les métaux liquides et leurs alliages, les eutectiques à basse température, le mercure, les alliages de Wood à bas point de fusion, les solutions aqueuses, et les solutions polaires.

10. Structure selon l'une des revendications 1 à 9, caractérisée en ce qu'elle est encapsulée dans une enveloppe flexible ou analogue (21, 25 ; 21, 28 ; 31) la protégeant de tout contact avec un liquide extérieur différent utilisé dans l'appareil ou le système thermodynamique concerné.

11. Procédé d'utilisation d'une structure hétérogène selon l'une des revendications 1 à 10 pour accumuler de l'énergie, caractérisé en ce qu'on dispose dans une chambre fermée (45, 55, 65) au moins une structure hétérogène (10) dont la matrice lyophobe est non-monoporeuse en étant formée d'un mélange de matrices différentes, et on soumet cette structure à une compression forcée à température constante prédéterminée pour forcer le liquide de cette structure dans les passages capillaires de sa matrice solide poreuse et augmenter ainsi la surface de séparation solide/liquide, l'énergie accumulée lors de cette compression forcée pouvant être ensuite récupérée par une détente spontanée isotherme pour effectuer un travail utile.

12. Procédé selon la revendication 11, caractérisé en ce que l'énergie apportée lors de la compression forcée est essentiellement mécanique, et la température constante est choisie inférieure à la moitié de la température critique du liquide de la structure hétérogène (10), mais supérieure à la température de fusion dudit liquide, l'énergie récupérée ensuite lors de la détente spontanée isotherme étant principalement mécanique.

13. Procédé selon la revendication 11, caractérisé en ce que l'énergie apportée lors de la compression forcée est essentiellement thermique, et la température constante est choisie entre 0,5 et 1,0 fois la température critique du liquide de la structure hétérogène (10), l'énergie récupérée ensuite lors de la détente spontanée isotherme étant principalement thermique.

14. Procédé selon l'une des revendications 11 à 13, caractérisé en ce que l'énergie accumulée est stockée à l'issue de la phase de compression forcée, par refroidissement de la structure hétérogène à une température inférieure à la température de fusion du liquide de ladite structure, avant d'être libérée au moment désiré par simple échauffement de ladite structure à une température supérieure à la température de fusion précitée.

15. Appareil pour la mise en oeuvre d'un procédé selon l'une des revendications 11 à 14, caractérisé en ce qu'il comporte une chambre fermée de volume variable dans laquelle est logée au moins une structure hétérogène (10) selon l'une des revendications 1, 3, 5, ladite chambre étant délimitée par un piston coulissant (42, 52, 62) ou par une membrane flexible ou analogue (25,28).

16. Procédé d'utilisation d'une structure hétérogène selon l'une des revendications 1 à 10 pour dissiper de l'énergie, caractérisé en ce qu'on dispose dans une chambre fermée (85) au moins une structure hétérogène (10) dont la matrice lyophobe est ou non monoporeuse, et on soumet cette structure à une compression élevée par un impact, pour forcer du liquide de cette structure dans les passages capillaires de sa matrice solide poreuse et augmenter ainsi la surface de séparation solide/liquide, après quoi on laisse la structure se détendre spontanément à une pression basse prédéterminée.

17. Appareil pour la mise en oeuvre du procédé selon la revendication 16, caractérisé en ce qu'il comporte une chambre fermée de volume variable (85) dans laquelle est logée au moins une structure hétérogène (10) selon l'une des revendications 1, 3, 5, ladite chambre étant délimitée par un piston coulissant (84) dont la tige est dirigée dans la direction de l'impact prévu.

## Claims

1. A heterogeneous structure for accumulating or dissipating energy (10) for use in thermodynamic systems or devices, the structure being of the type comprising a porous capillary solid matrix and a liquid surrounding said matrix, said matrix being lyophobic relative to said liquid, the structure being characterized in that the porous capillary solid matrix (11) has open capillary porosity and controlled complex topology, with capillary passages (12) of varying section, i.e. the section of which has a radius that varies along a same passage, and the liquid (13) surrounding the porous capillary matrix (11) being selected to define a solid / liquid separation surface whose area varies isothermally and reversibly as a function of the external pressure to which the structure is subjected.

2. A structure according to claim 1, characterized in that the capillary passages (12.3, 12.4) of varying section are organized in the form of intersecting channels, or of channels comprising alternating microspheres and neck portions, thereby presenting high hysteresis when the structure is subjected to an isothermal compression-expansion process.

3. A heterogeneous structure for accumulating or dissipating energy (10) for use in thermodynamic systems or devices, the structure being of the type comprising a porous capillary solid matrix and a liquid surrounding said matrix, said matrix being lyophobic relative to said liquid, the structure being characterized in that the porous capillary solid matrix (11) has open capillary porosity and controlled complex topology, with capillary passages (12) which are mutually interconnected to form labyrinths, and the liquid (13) surrounding the porous capillary matrix (11) being selected to define a solid / liquid separation surface whose area varies isothermally and reversibly as a function of the external pressure to which the structure is subjected.

4. A structure according to claim 3, characterized in that the mutually interconnected capillary passages (12.1, 12.2) are organized to form cylindrical channels, slightly curved capillaries, or slots, so as to present low hysteresis when the structure is subjected to an isothermal compression-expansion process.

5. A heterogeneous structure for accumulating or dissipating energy (10) for use in thermodynamic systems or devices, the structure being of the type comprising a porous capillary solid matrix and a liquid surrounding said matrix, said matrix being lyophobic relative to said liquid, the structure being characterized in that the porous capillary solid matrix (11) has open capillary porosity and controlled complex topology, with capillary passages (12) of varying section, i.e. the section of which has a radius that varies along a same passage, and furthermore mutually interconnected to form labyrinths, and the liquid (13) surrounding the porous capillary matrix (11) being selected to define a solid / liquid separation surface whose area varies isothermally and reversibly as a function of the external pressure to which the structure is subjected.

6. A structure according to claim 5, characterized in that the matrix (11.5) the capillary passages (12.5) of which are of varying section and also mutually interconnected is made in the form of discrete particles co-operating with the liquid to form a suspension or a colloidal solution.

7. A structure according to any one of claims 1, 3 and 5, characterized in that the capillary passages (12) are coated on their surfaces (14) with an agent selected to make them lyophobic relative to the selected liquid, e.g. an organosilicone or an organofluorine compound.

8. A structure according to any one of claims 1, 3 and 5, characterized in that the matrix (11) includes discrete particles containing a ferromagnetic substance and / or the material of the capsule enclosing said matrix contains ferromagnetic substances.

9. A structure according to any one of claims 1 to 8, characterized in that the material constituting the porous capillary matrix (11) is selected from the group constituted by: silica gels; compounds of silica and of chromium, aluminosilicates; alumina; porous glasses; and graphite; and the associated liquid (13) is selected from the group constituted by: salts, fluxes, liquid metals and alloys thereof, low temperature eutectics, mercury, low melting point Wood's metal alloys, aqueous solutions, and polar solutions.

10. A structure according to any one of claims 1 to 9, characterized in that it is encapsulated in a flexible enclosure or the like (21, 25; 21, 28; 31) protecting it from any contact with a different external liquid used in the thermodynamic system or device concerned.

11. A method of using a heterogeneous structure according to any one of claims 1 to 10 for the purpose of accumulating energy, the method being characterized in that at least one heterogeneous structure (10) is placed in a closed chamber (45, 55, 65), the lyophobic matrix of the heterogeneous structure being non-monoporous and constituted by a mixture of different matrices, and said structure is subjected to forced compression at predetermined constant temperature to force the liquid of said structure into the capillary passages of its porous solid matrix, thereby increasing the area of the liquid / solid separation surface, the energy accumulated during such forced compression being subsequently recoverable by spontaneous isothermal expansion to perform useful work.

12. A method according to claim 11, characterized in that the energy input during forced compression is essentially mechanical energy, and the constant temperature is selected to be less than half the critical temperature of the liquid of the heterogeneous structure (10), but more than the melting temperature of said liquid, the energy subsequently recovered during spontaneous isothermal expansion being mainly mechanical energy.

13. A method according to claim 11, characterized in that the energy input during the forced compression is essentially thermal energy, and the constant temperature is selected to lie in the range 0.5 times to 1.0 times the critical temperature of the liquid of the heterogeneous structure (10), the energy subsequently recovered during spontaneous isothermal expansion being mainly thermal energy.

14. A method according to any one of claims 11 to 13, characterized in that the accumulated energy is stored at the end of the forced compression stage by cooling the heterogeneous structure to a temperature below the melting temperature of the liquid of said structure, prior to being released at the desired moment merely by heating said structure to a temperature above the above-mentioned melting temperature.

15. A device for implementing a method according to any one of claims 11 to 14, characterized in that it includes a closed chamber of variable volume in which is received at least one heterogeneous structure (10) according to any one of claims 1, 3, 5, said chamber being defined by a sliding piston (42, 52, 62) or by a flexible membrane or the like (25, 28).

16. A method of using a heterogeneous structure according to any one of claims 1 to 10, to dissipate energy, the method being characterized in that at least one heterogeneous structure (10) is disposed in a closed chamber (85), with the lyophobic matrix of the heterogeneous structure being optionally monoporous, and said structure is subjected to high compression by an impact so as to force the liquid of said structure into the capillary passages of its porous solid matrix, thereby increasing the area of the solid / liquid separation surface, after which the structure is allowed to expand spontaneously at a predetermined low pressure.

17. A device for implementing the method of claim 16, characterized in that it includes a closed chamber of variable volume (85) in which is received at least one heterogeneous structure (10) according to any one of claims 1, 3, 5, said chamber being defined by a sliding piston (84) whose rod is directed in the direction of the expected impact.

## Patentansprüche

1. Heterogene Struktur (10) zur Akkumulation oder Dissipation von Energie, wobei die Struktur dazu bestimmt ist, in thermodynamischen Vorrichtungen oder Systemen eingesetzt zu werden und von der Art mit einer festen, kapillaren, porösen Matrix und mit einer diese Matrix umgebenden Flüssigkeit ist, wobei die genannte Matrix gegenüber der genannten Flüssigkeit lyophob ist, dadurch **gekennzeichnet**, daß die feste, kapillare, poröse Matrix (11) eine kapillare, offene Porosität und eine gesteuerte komplexe Topologie hat, mit kapillaren Durchgängen (12) mit Querschnittsveränderungen, d.h. deren Querschnittsradius sich im Inneren eines gleichen Durchganges verändert, und die Flüssigkeit (13), welche die poröse, kapillare Matrix (11) umgibt, ausgewählt wird, um eine fest/flüssig-Trennfläche festzulegen, die auf isotherme Weise erweiterbar und abhängig von dem äußeren Druck, dem die Struktur ausgesetzt ist, reversibel ist.

2. Struktur nach Anspruch 1, dadurch **gekennzeichnet,** daß die kapillaren Durchgänge (12.3, 12.4) mit Querschnittsveränderungen in der Form von gekreuzten Kanälen, Kanälen im Wechsel mit Einschnürungen oder im Wechsel mit Mikrokugeln angeordnet sind, auf eine Art, daß sie eine erhöhte Hysterese aufweisen, wenn die Struktur einem isothermen Kompressions-Entspannungs-Vorgang ausgesetzt wird.

3. Heterogene Struktur zur Akkumulation oder Dissipation von Energie (10), wobei die Struktur dazu bestimmt ist, in thermodynamischen Vorrichtungen oder Systemen eingesetzt zu werden und von der Art mit einer festen, kapillaren, porösen Matrix und mit einer diese Matrix umgebenden Flüssigkeit ist, wobei die genannte Matrix gegenüber der genannten Flüssigkeit lyophob ist, dadurch **gekennzeichnet,** daß die feste, kapillare, poröse Matrix (11) eine kapillare, offene Porosität und eine gesteuerte komplexe Topologie hat, mit kapillaren Durchgängen (12), die miteinander verbunden sind, um Labyrinthe auszubilden, und die die poröse, kapillare Matrix (11) umgebende Flüssigkeit (13) ausgewählt wird, um eine fest/flüssig-Trennfläche festzulegen, die isotherm erweiterbar und abhängig von dem äußeren Druck, dem die Struktur ausgesetzt ist, reversibel ist.

4. Struktur nach Anspruch 3, dadurch **gekennzeichnet,** daß die miteinander verbundenen kapillaren Durchgänge (12.1, 12.2) in Form von zylindrischen Kanälen, leicht gebogenen Kapillaren oder Schlitzen so angeordnet sind, daß sie eine geringe Hysterese aufweisen, wenn die Struktur einem isothermen Kompressions-Entspannungs-Vorgang ausgesetzt wird.

5. Heterogene Struktur (10) zur Akkumulation oder Dissipation von Energie, wobei die Struktur dazu bestimmt ist, in thermodynamischen Vorrichtungen oder Systemen eingesetzt zu werden und von der Art mit einer festen, kapillaren, porösen Matrix und mit einer diese Matrix umgebenden Flüssigkeit ist, wobei die genannte Matrix gegenüber der genannten Flüssigkeit lyophob ist, dadurch **gekennzeichnet,** daß die feste, kapillare, poröse Matrix (11) eine kapillare, offene Porosität und eine gesteuerte komplexe Topologie hat, mit kapillaren Durchgängen (12) mit Querschnittsveränderungen, d.h. deren Querschnittsradius sich im Inneren eines gleichen Durchganges verändert, und die darüber hinaus miteinander verbunden sind, um Labyrinthe auszubilden, und die die poröse kapillare Matrix (11) umgebende Flüssigkeit (13) ausgewählt wird, um eine fest/flüssig-Trennfläche festzulegen, die isotherm erweiterbar und abhängig von dem äußeren Druck, dem die Struktur ausgesetzt ist, reversibel ist.

6. Struktur nach Anspruch 5, dadurch **gekennzeichnet,** daß die Matrix (11.5), deren kapillare Durchgänge (12.5) Querschnittsveränderungen aufweisen und miteinander verbunden sind, in der Form diskreter Partikel hergestellt ist, die mit der Flüssigkeit eine Suspension oder eine kolloidale Lösung bilden.

7. Struktur nach einem der Ansprüche 1, 3 und 5, dadurch **gekennzeichnet,** daß die kapillaren Durchgänge (12) auf ihrer Oberfläche (14) von einem Mittel überzogen sind, das ausgewählt wird, um sie gegenüber der ausgesuchten Flüssigkeit lyophob zu machen, und beispielsweise eine silikonorganische oder eine fluororganische Verbindung ist.

8. Struktur nach einem der Ansprüche 1, 3 und 5, dadurch **gekennzeichnet,** daß die Matrix (11) diskrete Partikel umfaßt, die eine ferromagnetische Substanz einschließen und/oder das Material der Kapsel, welche die genannte Matrix umhüllt, ferromagnetische Substanzen einschließt.

9. Struktur nach einem der Ansprüche 1 bis 8, dadurch **gekennzeichnet,** daß das Grundmaterial der porösen, kapillaren Matrix (11) aus der Gruppe ausgewählt wird, die aus den Kieselsäuregelen, den Silizium- und Chromverbindungen, den Alumosilikaten, der Tonerde, den porösen Gläsern und dem Graphit besteht, und die dazugehörige Flüssigkeit (13) aus der Gruppe ausgewählt wird, die aus den Salzen, den Flußmitteln, den Flüssigmetallen und ihren Legierungen, den Eutektika mit niedriger Temperatur, dem Quecksilber, den Woodschen Metallen mit niedrigem Schmelzpunkt, den wäßrigen Lösungen und den polaren Lösungen besteht.

10. Struktur nach einem der Ansprüche 1 bis 9, dadurch **gekennzeichnet,** daß sie in einer elastischen oder analogen Umhüllung (21, 25; 21, 28; 31) eingekapselt ist, die sie vor jeglichem Kontakt mit einer anderen äußeren Flüssigkeit schützt, die in der betroffenen thermodynamischen Vorrichtung oder dem System verwendet wird.

11. Verfahren zum Einsetzen einer heterogenen Struktur nach einem der Ansprüche 1 bis 10 zur Akkumulation der Energie, dadurch **gekennzeichnet,** daß man in einer geschlossenen Kammer (45, 55, 65) mindestens eine heterogene Struktur (10) anordnet, deren lyophobe Matrix nicht monoporös ist, indem man sie aus einer Mischung aus verschiedenen Matrizen gebildet hat, und man diese Struktur einer erzwungenen Kompression bei vorgegebener, gleichbleibender Temperatur aussetzt, um die Flüssigkeit dieser Struktur in die kapillaren Durchgänge ihrer porösen, festen Matrix zu drücken und so die fest/flüssig-Trennfläche zu vergrößern, wobei die während dieser erzwungenen Kompression gespeicherte Energie anschließend durch eine spontane isotherme Entspannung rückgewonnen werden kann, um eine Nutzarbeit zu bewirken.

12. Verfahren nach Anspruch 11, dadurch **gekennzeichnet,** daß die während der erzwungenen Kompression zugeführte Energie im wesentlichen mechanisch ist, und die gewählte gleichbleibende Temperatur unter der Hälfte der kritischen Temperatur der Flüssigkeit der heterogenen Struktur (10), jedoch über der Schmelztemperatur der genannten Flüssigkeit liegt, wobei die anschließend während der spontanen isothermen Entspannung rückgewonnene Energie im wesentlichen mechanisch ist.

13. Verfahren nach Anspruch 11, dadurch **gekennzeichnet,** daß die während der erzwungenen Kompression zugeführte Energie im wesentlichen thermisch ist, und die gewählte gleichbleibende Temperatur zwischen 0,5 und 1,0 mal der kritischen Temperatur der Flüssigkeit der heterogenen Struktur (10) liegt, wobei die anschließend während der spontanen isothermen Entspannung rückgewonnene Energie im wesentlichen thermisch ist.

14. Verfahren nach einem der Ansprüche 11 bis 13, dadurch **gekennzeichnet,** daß die gespeicherte Energie am Ende der Phase der erzwungenen Kompression durch Abkühlen der heterogenen Struktur auf eine Temperatur unter der Schmelztemperatur der Flüssigkeit der genannten Struktur gespeichert wird, bevor sie im gewünschten Augenblick durch einfaches Erwärmen der genannten Struktur auf eine Temperatur über der vorstehend genannten Schmelztemperatur freigesetzt wird.

15. Vorrichtung zum Durchführen eines Verfahrens nach einem der Ansprüche 11 bis 14, dadurch **gekennzeichnet,** daß sie eine geschlossene Kammer mit veränderlichem Volumen hat, in der mindestens eine heterogene Struktur (10) nach einem der Ansprüche 1, 3, 5 untergebracht ist, wobei die genannte Kammer von einem gleitenden Kolben (42, 52, 62) oder von einer elastischen oder analogen Membran (25, 28) begrenzt ist.

16. Verfahren zum Einsetzen einer heterogenen Struktur nach einem der Ansprüche 1 bis 10 zur Dissipation der Energie, dadurch **gekennzeichnet,** daß man in einer geschlossenen Kammer (85) mindestens eine heterogene Struktur (10) anordnet, deren lyophobe Matrix monoporös ist oder nicht, und man diese Struktur durch einen Stoß einer erhöhten Kompression aussetzt, um die Flüssigkeit dieser Struktur in die kapillaren Durchgänge ihrer porösen, festen Matrix zu drücken und auf diese Weise die fest/flüssig-Trennfläche zu vergrößern, woraufhin man die Struktur sich spontan auf einen vorgegebenen niederen Druck entspannen läßt.

17. Vorrichtung zum Durchführen des Verfahrens nach Anspruch 16, dadurch **gekennzeichnet**, daß sie eine geschlossene Kammer mit veränderlichem Volumen (85) hat, in der mindestens eine heterogene Struktur (10) nach einem der Ansprüche 1, 3, 5 untergebracht ist, wobei die genannte Kammer von einem gleitenden Kolben (84) begrenzt ist, dessen Stange in die Richtung des vorgesehenen Stoßes gerichtet ist.
